# EUROPEAN PATENT APPLICATION

(11) **EP 1 878 831 A1**
(43) Date of publication of application: **16.01.2008**
(21) Application number: 07013700.5
(22) Date of filing: 12.07.2007
(51) Int. Cl.: E01C 5/16, E01C 5/20, E01C 9/08

(54) **Edging tiles**

(30) Priority: 13.07.2006 GB 0613916
(71) Applicant: Vaughans of Leicester Ltd, Disraeli Street Old Aylestone, Leicester LE2 8LX (GB)
(72) Inventor: Vaughan, Jonathan Robert Paul, Leicestershire, LE8 9DS (GB)
(74) Representative: Serjeants

(57) **Abstract**

The present invention provides an edging tile (1) that can be assembled together with other interlocking tiles to form a planar base that can be used as a helicopter landing pad, roadway, taxiway or general hard standing, for example. The edging tile (1) includes an interlocking portion (2a) including coupling means (8, 10) to enable the edging tile to be connected to one or more of the other interlocking tiles and a sloping ramp portion (14) that in use defines an outer edge of the planar base.

## Description

### Technical Field

The present invention relates to edging tiles, and in particular to edging tiles that can be connected with other tiles to form a planar base.

### Background Art

It is known to provide tiles that can be connected together to form a planar base that can be used as a helicopter landing pad, roadway, taxiway or general hard-standing, for example. Such tiles are particularly useful for temporary construction because they can be easily transported and assembled together on site.

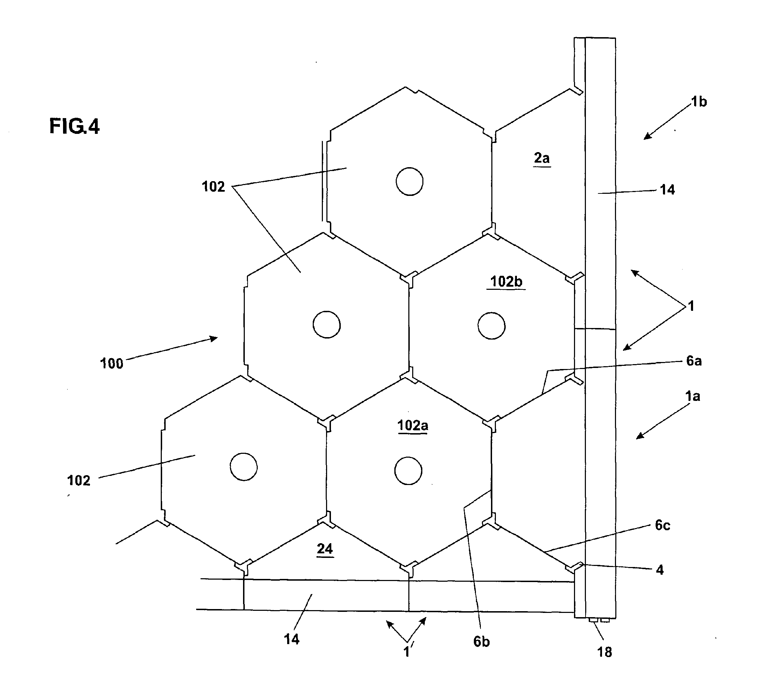

European Patent 0621373 (Krauss-Maffei AG) discloses a hexagonal tile having a coupling projection 5, 7 on each of its six sides. On three non-adjacent sides the coupling projections are designed as a hook 5 with a hook profile 9 that turns upwards as shown in Figure 4 of European Patent 0621373. On the other three sides the coupling projections are designed as eyes 7 for connecting with a hook of a neighbouring tile. As shown in Figure 4 of European Patent 0621373, the eyes 7 form a rounded link 11 that projects downwards and defines a recess 13 for receiving the hook profile. The recess 13 is closed off from the upper side of the tile by a wall 16 so that the tile has a continuous surface. A plurality of identical tiles can be assembled together using the coupling projections to form a planar base having the desired size and shape.

In some cases it is desirable to provide the planar base with some sort of ramped edging to provide a smooth transition between the surrounding ground and the upper surface of the planar base. This can assist vehicles to manoeuvre onto the planar base. This ramped edging usually takes the form of metal or heavy-duty plastic strips that are overlaid along the edges of the planar base and secured in position using ground anchors.

Hexagonal tiles pose a particular problem at the edges of the planar base. Although a hexagonal structure is very stable because each tile is connected to six neighbouring tiles, the edges of the planar base will not be straight. It will be readily appreciated that for a generally rectangular planar base, an opposing two of the edges will have a series of triangular-shaped gaps and the other two opposing edges will have a series of trapezium-shaped gaps. These gaps can be filled by special triangular- and trapezium-shaped tiles (edging tiles) to provide a straight edge to the planar base which can then be overlaid by the strips of the ramped edging. However, the overall stability of the edge regions is not as good as the rest of the planar base because the triangular- and trapezium-shaped tiles are only connected at most to two and three hexagonal tiles, respectively. The corners of the planar base are especially vulnerable because here a trapezium-shaped tile may be connected to two hexagonal tiles and one triangular-shaped tile. Similarly, a triangular-shaped tile may be connected to just a single hexagonal tile and one trapezium-shaped tile. Overlaying the strips of the ramped edging on these edging tiles is therefore not ideal because of the large forces that are applied to the edge regions by the passage of a vehicle over the ramped edging. This problem is exacerbated by the fact that the strips of the ramped edging are not connected directly to the underlying edging tiles.

For rapid deployment it is desirable to minimise the number of individual component parts that need to be carried to assemble a planar base. It would therefore be particularly useful not to have to store and transport both edging tiles and strips for forming the ramped edging.

### Summary of the Invention

The present invention aims to overcome the problems mentioned above and provides an edging tile that can be assembled together with other interlocking tiles to form a planar base, the edging tile comprising:
an interlocking portion including coupling means to enable the edging tile to be connected to one or more of the other interlocking tiles; and
a sloping ramp portion that in use defines an outer edge of the planar base;
wherein the coupling means includes a hook means to enable the edging tile to be connected to a channel means of an adjacent interlocking tile and a channel means to enable the edging tile to be connected to a hook means of an adjacent interlocking tile; and
CHARACTERISED IN THAT the hook means and the channel means include an aperture for receiving a locking peg.

The interlocking tiles can be square or rectangular shaped. However, it is generally preferred that the interlocking tiles are hexagonal shaped so that each interlocking tile is connected to six adjacent interlocking tiles instead of four. This improves the overall strength and rigidity of the planar base. If the interlocking tiles are hexagonal then it will be readily appreciated that the sides of a generally rectangular assembled planar base will not be perfectly straight. An opposing two of the edges will have a series of triangular-shaped gaps and the other two opposing edges will have a series of trapezium-shaped gaps. These gaps are filled by the edging tiles of the present invention to provide straight edges to the planar base, the edges being ultimately defined by the ramp portions. The interlocking portion of the edging tile can therefore be substantially trapezium-shaped or substantially triangular-shaped depending on which of the gaps it is designed to fill.

The width and angle of slope of the integral ramp portion can be determined with reference to the intended use of the planar base. For example, a wide and shallow ramp portion might be preferred if the planar base is going to be used by civilian vehicles whereas a narrow and steep ramp portion might be acceptable for military vehicles.

It will be readily appreciated that any means of connecting the interlocking tiles together in a quick and easy manner may be used. Alternate edges of the interlocking tiles are provided with integral coupling means in the form of hook means and channel means. The coupling means provided on the interlocking portion of the edging tile is preferably the same as, or at the very least compatible with, the coupling means provided on the interlocking tiles. The consistent use of the same coupling means on the edge tiles and the interlocking tiles helps to make the planar base easy to assemble. In some cases, the arrangement of the coupling means might have to be slightly different to form so-called "right hand" and "left hand" edging tiles. For example, if the interlocking portion of the edging tile is trapezium shaped with three outer edges (the fourth edge being integral with the ramp portion) then the two outer edges may have channels and the intermediate edge may have a hook. These edging tiles can be used to fill the trapezium-shaped gaps on one side of the assembled planar base. However, the trapezium-shaped gaps on the opposite side of the assembled planar base may have to be filled by edging tiles where the two outer edges of the interlocking portion have hooks and the intermediate edge has a channel.

Each edging tile may also be provided with wing portions having coupling means such that an edging tile can be connected along two edges (i.e. an edge of the trapezium- or triangular-shaped interlocking portion and an edge of a wing portion) to the same interlocking tile. The coupling means provided on the wing portions is preferably the same as the coupling means provided on the interlocking portion.

The interlocking portion and/or the ramp portion of the edging tile may further include coupling means to enable the edging tile to be connected to one or more adjacent edging tiles. These coupling means can be the same as the coupling means provided on the interlocking portion. However, it may often be more appropriate for these coupling means to be different.

The hook means and the channel means of the coupling means provided on the interlocking portion and/or the wing portions of the edging tile include an aperture for receiving a locking peg. A corresponding aperture may be provided on the hook means and the channel means of the interlocking tiles. Once a hook means of an edging tile has been received in a channel means of an adjacent interlocking tile (or *vice versa*) a locking peg can be inserted through the aligned apertures in the channel means and the hook means to more securely connect the edging tile and the interlocking tile together. Each respective hook means and channel means may include more than one aperture depending on the circumstances. The locking peg will normally be freely removable from the aperture, but can optionally be more permanently fixed if the planar base is to remain assembled for relatively long periods of time. The interlocking tiles can also be secured using ties or connector pieces or by a more permanent mechanical connection.

The ramp portion in use preferably defines a substantially straight outer edge of the planar base. However, the ramp portion can be shaped to make the outer edge of the planar base any suitable shape such as curved or incorporate cut-out portions, for example.

The edging tile may further include an aperture for receiving a lighting unit that is optionally self-contained. The aperture can be provided at any suitable location. The aperture can be plugged or capped by a suitably shaped cover if it is not used.

The edging tile may further include an aperture for receiving a ground anchor. The ground anchors stabilise the planar base and prevent it from lifting if the downwash caused by the helicopter blades during approach, takeoff or landing gets underneath the planar base, for example. The number of ground anchors that are needed will depend on a number of factors including the ground conditions, the type of air or ground traffic that will be landing on, or travelling over, the planar base and the environmental conditions (high ambient wind conditions may enhance the effect of helicopter downwash, for example).

At least one cut-out portion can be provided in the edging tile to define an aperture between the edging tile and an adjacent edging tile or interlocking tile when the edging tile is connected to that adjacent edging tile or interlocking tile. The aperture can help to prevent the lifting caused by helicopter downwash by allowing any air that gets underneath the planar base to escape. However, the size of the aperture is preferably not so large as to allow large amounts of dust to blow through the planar base with the downwash and decrease visibility (i.e. cause "brown out"). The apertures also improve the drainage to allow surface water to flow off the planar base and make it easier to lift the edging tiles when the planar base is dismantled if it has been laid on muddy or boggy ground. The cut-out portion is preferably formed in the interlocking portion of the edging tile or between the interlocking portion and wing portion of the edging tile.

For ease of transport and assembly, it is generally preferred that the edging tile is made of a lightweight but rigid plastics material such as high impact, flame retardant and UV stabilised modified polypropylene, for example. The edging tile should ideally have high resilience and strength, even at low temperatures. It should also have good chemical resistance, particularly against oil spills, grease or petroleum spirit. Other materials such as a lightweight metal can also be used.

The present invention further provides a kit comprising a plurality of edging tiles as described above and a plurality of interlocking tiles that can be assembled together to form a planar base.

The present invention further provides a planar base comprising a plurality of edging tiles according to any preceding claim and a plurality of interlocking tiles assembled together.

The planar base can be rapidly deployed and recovered. To deploy the planar base the interlocking tiles and edging tiles are unloaded and then assembled together manually with the edging tiles being received in the trapezium- and triangular-shaped gaps between the interlocking tiles such that the sloping ramp portions define the outer edges of the planar base. The edging tiles are connected directly to the adjacent interlocking panels (and optionally to each other) by coupling means and locking pegs are inserted into the aligned apertures in the hook means and channel means. This provides an extremely strong and rigid ramped edge that can cope with the passage of heavy vehicles. Providing the edging tiles with an integral ramp portion eliminates the need to transport separate strips.

When assembled, the planar base is sufficiently strong to support heavy downward loading. This means that the planar base can be used as a helicopter landing pads, roadways, runways, taxiways, general hard-standing and the like.

### Drawings

Figure 1 is a perspective view showing the upper surface of a first edging tile according to the present invention;
Figure 2 is a perspective view showing the lower surface of the first edging tile of Figure 1;
Figure 3 is a perspective view showing the upper surface of a second edging tile according to the present invention; and
Figure 4 is a top view of part of a planar base incorporating the first edging tile of Figure 1 and the second edging tile of Figure 3 together with standard hexagonal interlocking tiles.

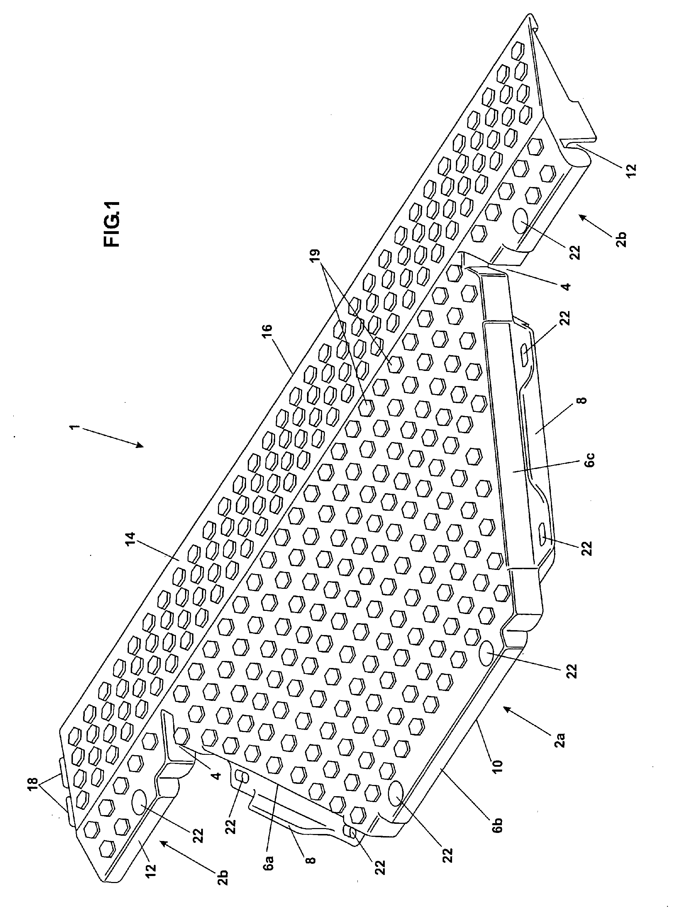

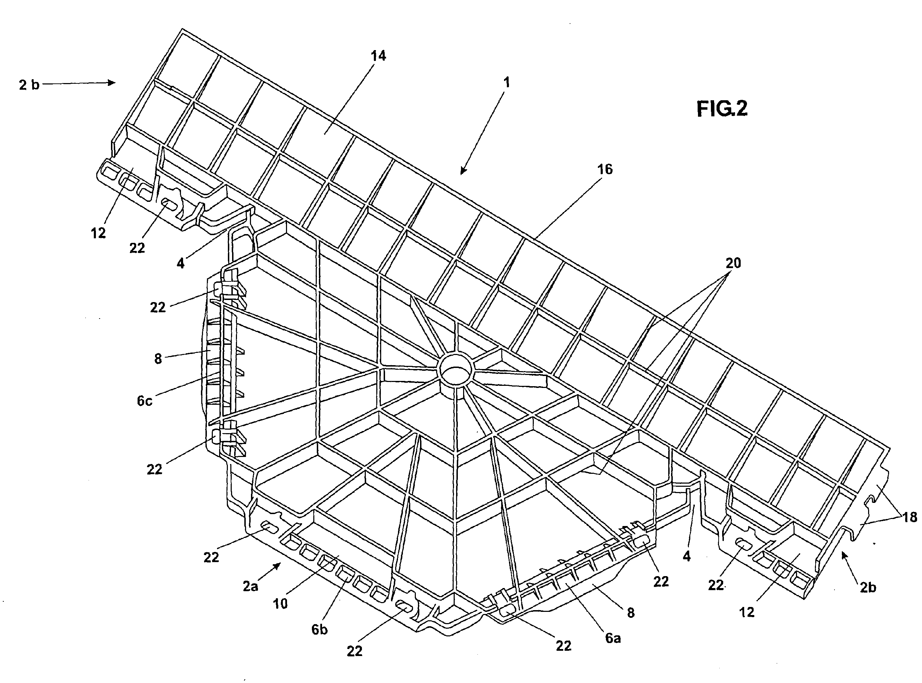

Figure 1 shows an edging tile 1 made of a durable and lightweight plastics material. The edging tile 1 has an interlocking portion 2a that is substantially trapezium-shaped and wing portions 2b. A cut-out portion 4 is provided between the interlocking portion 2a and the wing portions 2b to define an aperture. Two sides 6a and 6c of the interlocking portion 2a have hooks 8 and the remaining side 6b has a channel 10 (best seen in Figure 2). A channel 12 is also provided in each of the wing portions 2b. An alternative edging tile (not shown) may be arranged such that the two sides 6a and 6c of the interlocking portion 2a have channels and the remaining side 6b has a hook. In this case, hooks would also be provided on each of the wing portions 2b.

The edging tile 1 has a sloping ramp portion 14 that is angled to provide a smooth transition between the upper surface of the interlocking portion 2a and the surrounding ground. The ramp portion 14 has a straight edge 16 but this could be shaped differently if appropriate. An individual attachment hook 18 is provided at one end of the ramp portion 14 to enable the edging tile 1 to be connected to an adjacent edging tile.

The upper surface of the edging tile 1 includes a number of raised projections 19 to provide a non-slip surface. The underside of the edging tile 1 has a pattern of structural reinforcing ribs 20 to strengthen the edging tile.

The hooks 8 and channels 10 and 12 include apertures 22 into which locking pegs (not shown) can be inserted to secure the edging tiles 1 to adjacent interlocking tiles.

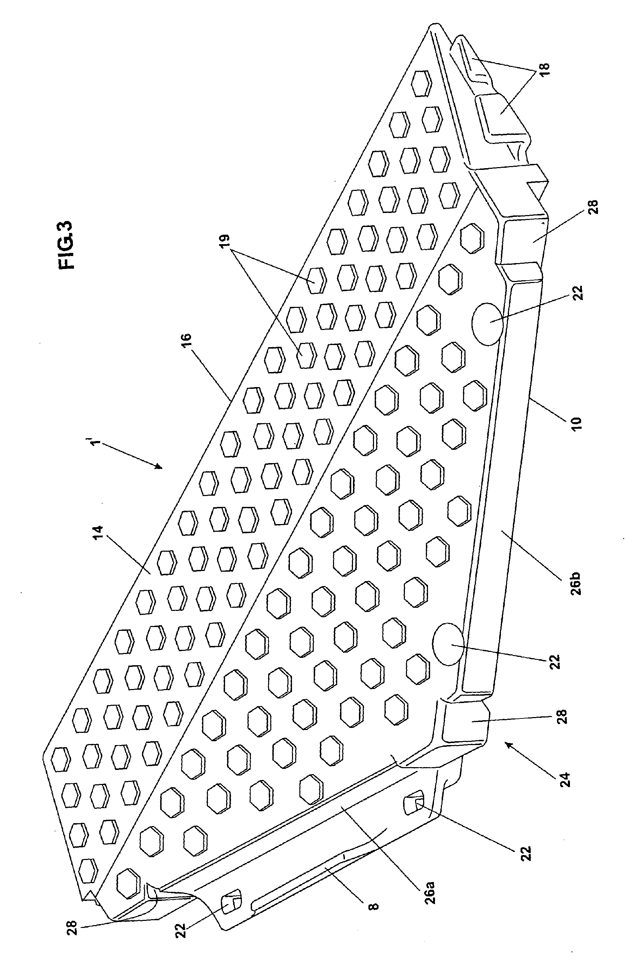

Figure 3 shows a slightly different edging tile 1' where the interlocking portion 24 is triangular-shaped. One of the sides 26a of the interlocking portion 24 has a hook 8 and the other one of the sides 26b has a channel 10. The edging tile 1' does not include wing portions. Cut-out portions (or notches) 28 are formed in the edges of the interlocking portion 24. The sloping ramp portion 14 includes an individual attachment hook 18 to enable the edging tile 1' to be connected to an adjacent edging tile. Other parts of the edging title 1' that are the same as the edging tile 1 of Figures 1 and 2 have been given the same reference numerals.

Figure 4 shows part of a simple planar base 100 that can be assembled from a number of hexagonal interlocking tiles 102 and a series of edging tiles 1 and 1'. The interlocking tiles 102 are of known construction and are connected together using hooks and channels that are the same as, or at least compatible with, those provided on the trapezium- and triangular-shaped interlocking portions 2a and 24 of the edging tiles 1 and 1'. It can be seen that an edge of the planar base has a series of triangular-shaped gaps and the other edge has a series of trapezium-shaped gaps. The trapezium-shaped gaps are filled by the edging tiles 1 that have a trapezium-shaped interlocking portion 2a. The triangular-shaped gaps are filled by the edging tiles 1' that have a triangular-shaped interlocking portion 24. The completed planar base 100 has straight edges defined by the outer edges 16 of the ramp portions 14 of the edging tiles 1 and 1'.

Each edging tile 1 is connected to its neighbouring interlocking tiles 102 by means of the hooks 8 and channels 10, If the corner edging tile 1a is taken as an example then the hook of the interlocking tile 102a to its immediate left is received in the channel 10 provided on its adjacent side 6b. The channel of the interlocking tile 102b to its upper left receives the hook 8 provided on its adjacent side 6a. The hook of the interlocking tile 102b is also received in the channel 12 provided in the adjacent wing portion 2b. The edging tile 1a at the bottom right-hand corner is also connected to the adjacent edging tile 1' with the hook 8 provided on the adjacent side 6c being received in a channel provided in the interlocking portion of the edging tile 1'. (Note that the edging tiles 1' of Figure 4 therefore have a slightly different configuration to those shown in Figure 3 with a channel in place of a hook and a *vice versa.* Edging tiles 1' having the configuration of Figure 3 will be used to fill the triangular-shaped gaps in the opposing side of the planar base 100.)

Finally, the edging tile 1a at the bottom right-hand corner is connected to the edging tile 1b that is immediately next to it (i.e. the edging tiles with the short sides of the ramp section in abutment) by the individual attachment hook 18 provided on the adjacent edging tile 1b. The individual attachment hook 18 provided on the edging tile 1a at the bottom right-hand corner is not needed and it can be optionally removed.

Locking pegs (not shown) are received into the apertures 22 provided in the hooks 8 and channels 10 and 12. These extend through correspondingly aligned apertures in the hooks and channels of the neighbouring interlocking tiles and edging tiles to provide a more reliable connection. The fact that the edging tiles 1 and 1' incorporate a ramp section 14 and are connected directly to the interlocking tiles 102 that form the main part of the planar base means that the ramp sections are strong and well suited to cope with the large forces that are applied when vehicles move from the surrounding ground onto the planar base.

## Claims

1. An edging tile (1;1') that can be assembled together with other interlocking tiles to form a planar base, the edging tile comprising:
an interlocking portion (2a;24) including coupling means to enable the edging tile (1;1') to be connected to one or more of the other interlocking tiles; and
a sloping ramp portion (14) that in use defines an outer edge of the planar base;
wherein the coupling means includes a hook means (8) to enable the edging tile (1) to be connected to a channel means of an adjacent interlocking tile and a channel means (10) to enable the edging tile (1;1') to be connected to a hook means of an adjacent interlocking tile; and
**CHARACTERISED IN THAT** the hook means (8) and the channel means (10) include an aperture (22) for receiving a locking peg.

2. An edging tile (1;1') according to claim 1, wherein the interlocking portion (24) is substantially triangular-shaped.

3. An edging tile (1;1') according to claim 1, wherein the interlocking portion (2a) is substantially trapezium-shaped.

4. An edging tile (1;1') according to any preceding claim, wherein the interlocking portion (2a;24) includes coupling means to enable the edging tile to be connected to one or more adjacent edging tiles.

5. An edging tile (1;1') according to any preceding claim, wherein the ramp portion (14) in use defines a substantially straight outer edge of the planar base.

6. An edging tile (1;1') according to any preceding claim, further comprising an aperture for receiving a lighting unit.

7. An edging tile (1;1') according to any preceding claim, further comprising an aperture for receiving a ground anchor.

8. An edging tile (1;1') according to any preceding claim, further comprising at least one cut-out portion (4) to define an aperture between the edging tile (1;1') and an adjacent edging tile or interlocking tile when the edging tile is connected to that adjacent edging tile or interlocking tile.

9. An edging tile (1;1') according to claim 8, wherein the cut-out portion (4) is formed in the interlocking portion (24) or between the interlocking portion (2a) and a wing portion (2b).

10. An edging tile (1;1') according to any preceding claim, wherein the edging tile is made of a rigid plastics material.

11. A kit comprising a plurality of edging tiles (1;1') according to any preceding claim and a plurality of interlocking tiles (102) that can be assembled together to form a planar base (100).

12. A kit according to claim 11, wherein the interlocking tiles (102) are hexagonal shaped and the interlocking portion (2a) of each edging tile (1;1') is substantially trapezium-shaped.

13. A kit according to claim 11, wherein the interlocking tiles (102) are hexagonal shaped and the interlocking portion (24) of each edging tile (1;1') is substantially triangular-shaped.

14. A planar base (100) comprising a plurality of edging tiles (1;1') according to any preceding claim and a plurality of interlocking tiles (102) assembled together.
